Europäisches Patentamt

European Patent Office

Office européen des brevets

(11) Publication number: **0 349 334**
**A2**

# EUROPEAN PATENT APPLICATION

(21) Application number: **89306651.4**

(22) Date of filing: **30.06.89**

(51) Int. Cl.⁵: **B 60 S 3/04**

(30) Priority: **30.06.88 GB 8815544**

(43) Date of publication of application:
**03.01.90 Bulletin 90/01**

(84) Designated Contracting States: **DE ES FR GB IT**

(71) Applicant: **CHASSIJET LIMITED**
**Tile Barn Hampton Lucy**
**Warwick CV35 8BQ (GB)**

(72) Inventor: **Gilliam, David Tovey**
**Tile Barn**
**Hampton Lucy Warwick, CV35 8BQ (GB)**

(74) Representative: **Adkins, Michael et al**
**4 Dyer's Buildings Holborn**
**London EC1N 2JT (GB)**

(54) **Cleaning apparatus.**

(57) The apparatus comprises two vertically movable carriages 23, 25 mounted on vertical sides 18, 19 of an arch 14. The carriages carry respective jets 28 and can be moved up and down by a motor 32 and cables 42, 43, 49. The arch 14 is movable horizontally on rails 10, 12. Fluid is fed to the jets as they move up and down and horizontally to clean a vehicle.

Fig.1.

**Description**

## CLEANING APPARATUS

The invention relates to cleaning apparatus particularly, but not exclusively, for a vehicle.

Over the years, various types of washing installations have been proposed for motor vehicles for washing the vehicle sides and/or roof. One particular type of unit involves an arch which extends around a vehicle and which can be moved along rails so as to travel the length of the vehicle. The arch carries a large number of jets through which water can be fed at pressure to dislodge soiling from the vehicle. In order to spray water from any one jet at high pressure where a large number of jets is used, a high rate of water delivery is required. In practice, even with a high power pump, it is difficult to achieve much more than around 100 psi or so at the outlet of each jet. Also, to achieve even that pressure, tiny outlet orifices are required which tend to create atomization of the water jet. Such atomization reduces substantially the effectiveness of the apparatus to remove heavy soiling from the vehicle.

An object of the present invention is to provide a cleaning apparatus which substantially reduces the above difficulty.

According to one aspect of the present invention there is provided a cleaning apparatus for cleaning a side and/or roof of an object such as a vehicle, the apparatus including support means having an outlet such as a jet movably mounted thereon through which cleaning fluid can pass, the jet being movable along the support means.

According to another aspect of the invention there is provided cleaning apparatus for cleaning a surface of a vehicle, the apparatus comprising an outlet such as a jet (herein called a "jet") mounted on support means to enable fluid received from a supply to be directed towards the surface of the vehicle, characterised in that the jet is movable up and down relative to the surface to be cleaned.

With such an arrangement a multiplicity of jets is not required as the jet can be moved along the support means so that the one jet provides a travelling fluid spray. The fluid pressure is concentrated at the travelling jet and, therefore, a very much higher pressure at that jet can be achieved than at the numerous jets of a multi-jet cleaning apparatus. This has advantages in that the cleaning fluid can be sprayed through the jet in a fairly coarse manner, thereby avoiding atomization of any significance, and, at such pressures, tenacious soiling can be removed more effectively than with the relatively low pressure jets of prior systems.

Where the side of the object is to be cleaned the jet may be movable in an up and down direction.

Preferably, the jet or a carriage on which the jet is mounted is movable along an upwardly extending rail on the support means. The drive for the carriage may be effected by any suitable means but is preferably moved by a cable.

The jet may be arranged for oscillation e.g., in a substantially horizontal plane as well as being movable in the up and down direction.

In a preferred embodiment, a second support means is provided for a second jet through which cleaning fluid will pass for cleaning an opposite side of the object, the second jet being movable along the second support means, e.g., in the up and down direction.

Preferably the second jet or a second carriage on which the second jet is mounted may be movable along a second upwardly extending rail. The two carriages may be operated by means of a motor e.g., via cabling.

The second jet may be arranged for oscillation, e.g., in a substantially horizontal plane as well as being movable in the up and down direction.

Fluid feed to the or each jet may be effected through a hose which extends from an outlet substantially mid-way between the ends of travel of the carriage. The hose is preferably no shorter than the distance between the outlet of the hose and the distance from the outlet to a limit of travel of the carriage.

Where the or each jet is to be oscillated, e.g., in a horizontal plane, drive means may be provided for effecting such oscillation. The drive means may be electrically powered and power supply cable to the drive means may extend between a point mid-way between the ends of the travel of the associated carriage and, like the hose, may have a length no less than the distance between the mid-point of travel and the limit of travel of that carriage.

The or each support means is preferably mounted upon a horizontal rail to enable it to be moved horizontally relative to a vehicle. The upwardly extending rail may, in such a case, be mounted on a base unit which moves along the horizontal rails.

Preferably, the or each support means is movable by cable means along its rail which can be driven from a motor. The cable means preferably includes a first run of cable between the drive means and a pulley and a second run of cable between the drive means and a second pulley. The two runs of cable are preferably independent lengths of cable each of which is wrapped around a winding drum or the like, one of which is arranged to wind off the drum as the other is being wound on. If desired, independent drums may be provided for the independent lengths of cable.

The first pulley preferably forms a support for the electrical supply for the drive means cable which supplies the electrical power for the associated oscillating jet.

The second pulley preferably supports the hose for the cleaning fluid.

The electrical cable and the fluid feed hose may be connected to opposite portions of the support means so that movement of the support means along its horizontal rail in one direction will be effected through the electrical cable whilst movement of the support means in the opposite direction will be effected through the fluid feed hose.

Where the device also includes the second jet for cleaning the opposite side of the object, a substantially identical arrangement of cabling may be provided for drawing the support means for the second jet along its horizontal rail. In such a case, the first and second sections of drive cable for the second support means may be wound around a second drum which, for convenience, may be arranged coaxial with the drum for driving the first set of cables for the first support means so as to be drivable by a common output shaft of the driving motor. In practice, that output shaft is an output shaft of a gearbox driven by the motor.

If desired, the two support means may comprise upwardly extending members which may be joined at their upper ends to form an arch. In such a case, a section joining the two upwardly extending members may carry a third jet which may be movable from side to side along the joining section for spraying cleaning fluid on to a roof of the object. In that case, the movement of the third jet could be effected by cable means or other suitable drive means. If cable means is used to drive the third jet, the cable means could be linked in with the cable drive for the upwardly moving first and second jets directly or via a suitable pulley system. The latter may effectively reduce the side to side movement of the further jet which will normally only need to move for part of the overall width of the object.

In order to make full use of the or each upwardly and downwardly moving jet, the upwardly extending rail along which it travels in the up and down direction may be arranged to pivot about an axis e.g., a vertical axis. That particular feature will be useful when the jet reaches its limit of horizontal travel so that, for example, at the front end of, say, a vehicle the rail will turn slightly towards the windscreen of the vehicle so as direct a jet positively on to the front of the vehicle rather than in a forward direction clear of the vehicle thereby making full use of the cleaning fluid. Similarly, the upwardly extending rail could pivot near the rear of the vehicle so that a very positive jet of fluid is sprayed against the vehicle rear end. It is envisaged that the rail could be arranged to pivot cyclically as the support means is moved along the upwardly extending rail to effect oscillating movement of the jet. That could be used instead of a specific drive motor for oscillating the jet as proposed above.

Alternatively, the jet may be mounted on a first trolley section which is pivotally mounted upon a second trolley section engaging the upwardly extending rails. Oscillating movement of the jet can then be effected by moving the second trolley section about its pivot relative to the first trolley section on the upwardly extending rail.

Although a drive motor powered by electricity is envisaged for effecting the oscillating movement of the or each of the jets, it will be appreciated that hydraulic means, e.g., powered by the cleaning fluid could be used to effect the oscillation and, or, indeed the travel of the or each jet.

Preferably, the apparatus is used in combination with a cleaning apparatus for cleaning the underside of the vehicle. In such a case, the underside cleaning apparatus can be of the type described in our European Patent No.0100680. The drive means for driving the upwardly extending members along the horizontal rails, could also be used to drive a carriage of the cleaning apparatus for cleaning the underside of the vehicle. Also, a source of cleaning fluid may be used which is common to both sets of apparatus.

Preferably, the movement of the or each jet can be controlled by a programmable unit. In that way, a jet may travel, for example, its full height when cleaning the cab section of a vehicle but may have reduced vertical travel when cleaning the side of a flat bed section of the vehicle. In that way, the rate of cleaning can be greatly increased for a vehicle where a full vertical travel of the jet is not required for the total length of the vehicle concerned. The speed of travel of the jet both in the vertical and horizontal direction may also be programmable so that particularly badly soiled parts of a known vehicle can receive a more concentrated treatment by the spray to dislodge the heavy soiling whereas other sections of the vehicle which are less heavily soiled may be sprayed for a relatively shorter time. .

The system may be of a portable nature so as to be demountable and movable from one place to another or may be a specific installation fixed to a floor say, of a garage or outdoor cleaning area.

Cleaning apparatus in accordance with the invention will now be described by way of example with reference to the accompany drawings in which:

Fig.1 is a schematic perspective view of a preferred form of apparatus in accordance with the invention,

Fig.2 is a view of part of the apparatus of Fig.1 showing a vertically movably carriage.

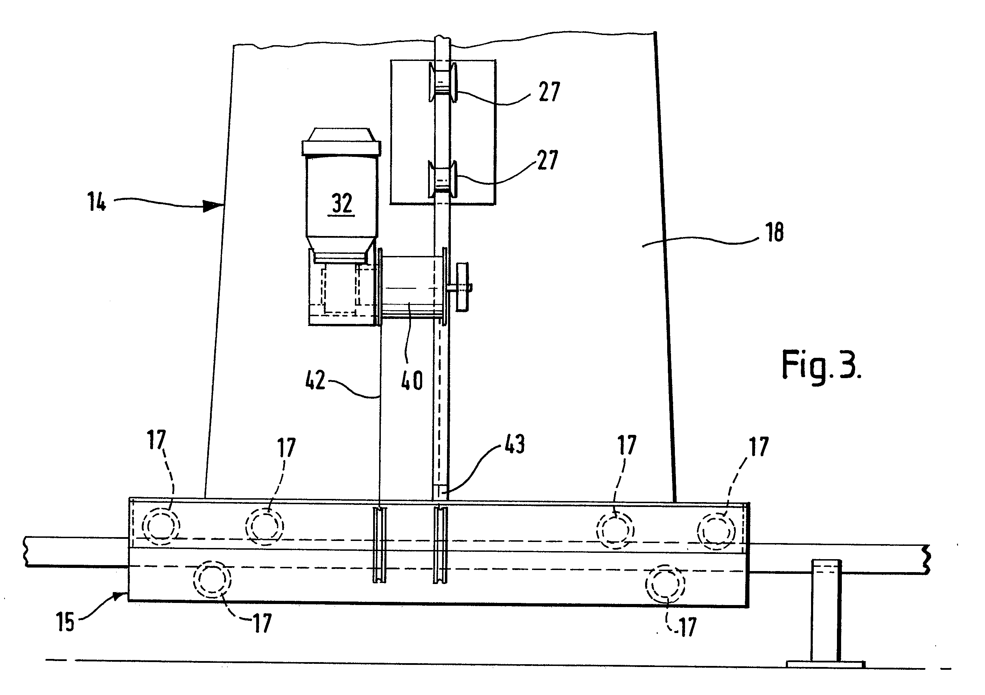

Fig.3 is a view of the apparatus of Fig.2 looking in the direction of arrow III in Fig.2,

Fig.4 is a plan view of part of the carriage shown in Figs.2 and 3,

Fig.5 is a cross-section through a rail mounting in Fig.4 on the line V-V in Fig.4,

Fig.6 is a diagrammatic view showing the arrangement of cabling for operating two carriages simultaneously, and

Fig.7 is a diagrammatic view of a drive unit for moving an arch of the apparatus shown in Fig.1 along horizontal rails.

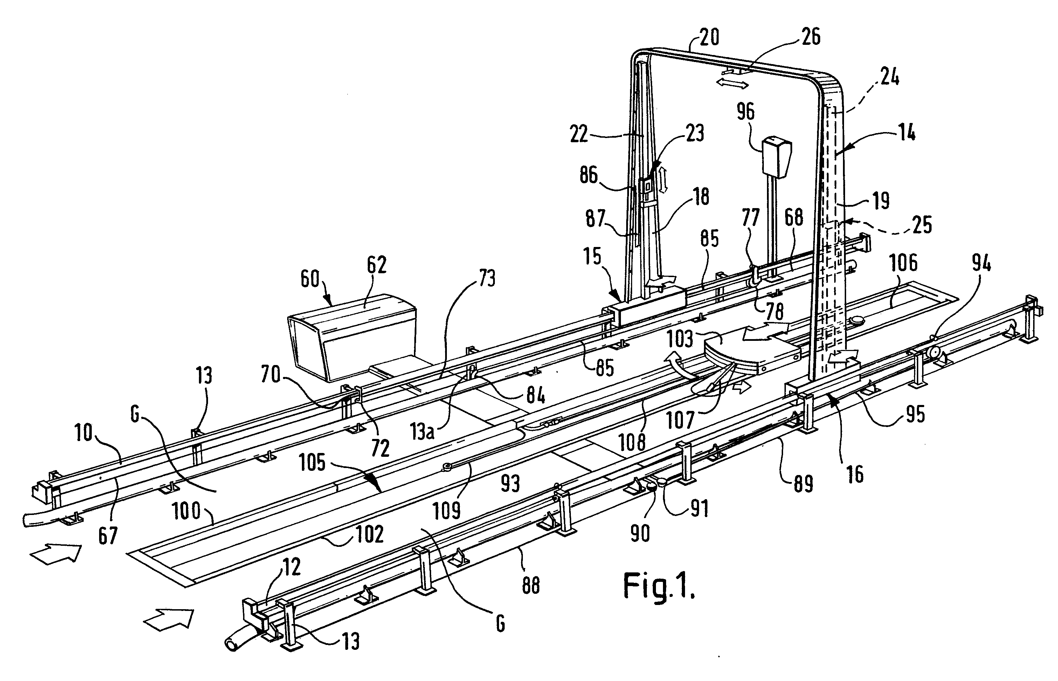

In Fig.1, two rails 10, 12 are carried by ground engaging supports 13. An arch 14 has two base units 15, 16 which carry opposed grooved rollers 17 which engage upper and lower surfaces of the respective rails 10, 12. The rollers 17 permit the arch 14 to be moved along the rails 10, 12 as described below.

The arch 14 comprises vertical sides 18, 19 (constituting the aforesaid support means) and a horizontal upper section 20. The side 18 supports a vertical rail 22 on which a carriage 23 is movable. The vertical side 19 carries a vertical rail 24 on which a carriage 25 is movable. The carriages 23 and 25 are substantially identical and the means for effecting their movement along the rails 22, 24 is described below.

The upper section 20 is also provided with a rail (not shown) on which a carriage 26 is movable.

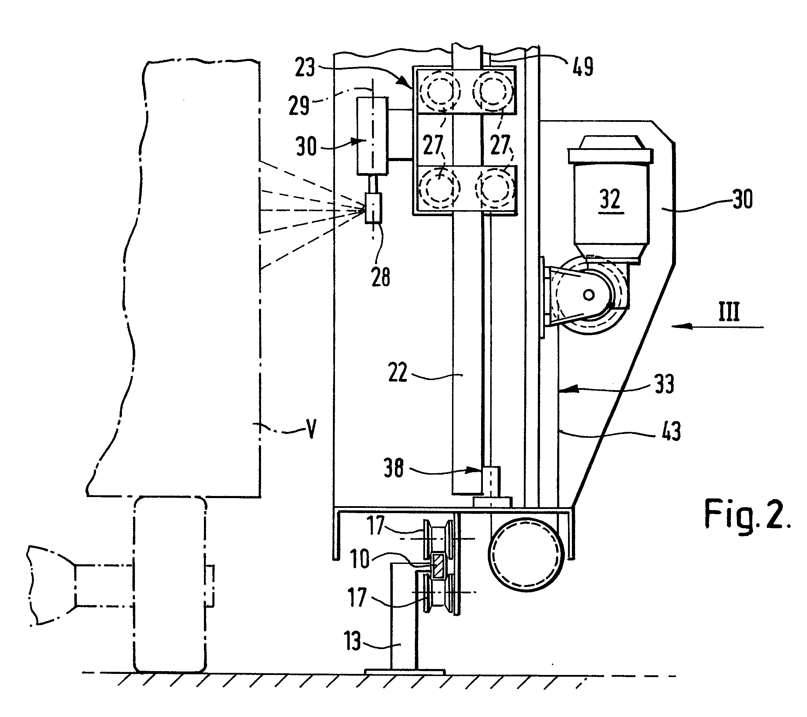

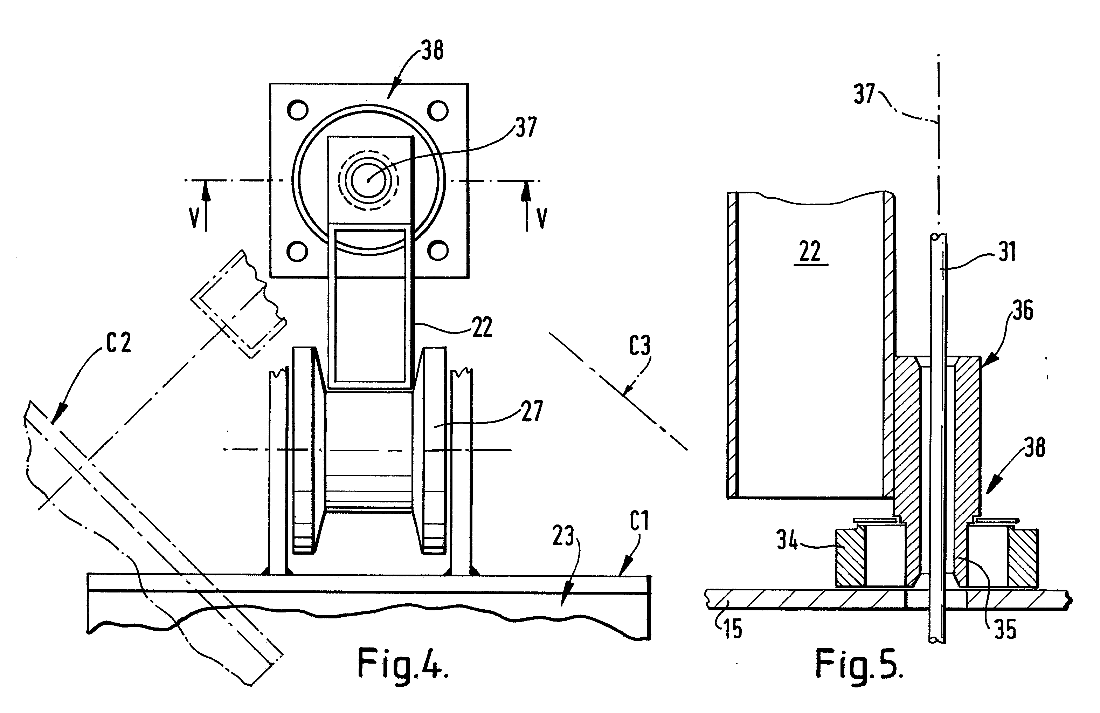

With reference to Fig.2 the carriage 23 includes four rollers 27 which engage opposite sides of the vertical rail 22. The carriage supports a spray jet 28 which can be oscillated about a vertical axis 29 by a motor 30. The vertical side 18 carries on its outer surface a flange 30 which carries a motor 32 arranged to transmit drive through cabling indicated generally at 33 to the carriages 23, 25. The rail 22 is mounted at its upper and lower ends for pivotal movement about a vertical axis 37. Figs.2, 4 and 5 illustrate a pivotal support 38 for the lower end of the rail, the rail being formed as a box-cross section tube. The lower pivot comprises a cylindrical bearing member 34 mounted on the base unit 15 and which rotatably supports a reduced cross-section lower end 35 of a hollow cylindrical rail mounting 36. The rail mounting 36 is suitably secured to the rail 22 by means not shown. A suitable motor (not shown) is provided for turning the rail about the vertical axis which passes through the centre of the rail mounting 36 to enable the carriage 23 to be moved from a position C1 in Fig.4 to a position C2 or C3 indicated in Fig.4. The total angular movement of the carriage about axis 37 may be around 90 degrees. It will be appreciated that such angular movement about axis 37 is additional to the oscillation of the spray jet 28 about the vertical axis 29. Cable 31 for supplying electrical power to the motor which turns the rail passes axially through the bearing unit 34 and rail mounting 36.

The carriage 25 and rail 24 are substantially identical to carriage 23 and rail 22 and rail 24 is mounted for pivoting in the same way as rail 22.

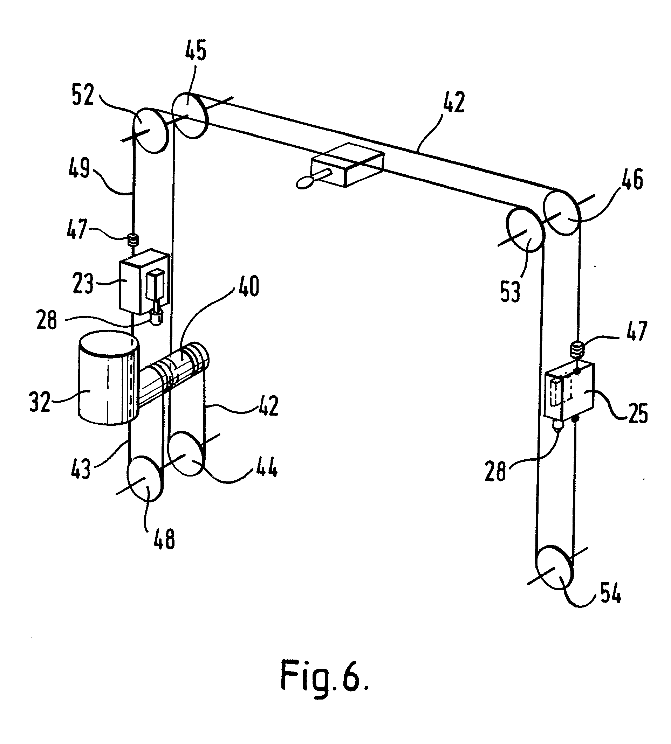

The arrangement of cabling 33 for moving the carriages 23, 25 will now be described with particular reference to Fig.6.

The motor 32 drives a drum 40 on which is wound a length of first cable 42 and a length of second cable 43. The cable 42 passes from the drum 40 around a first pulley 44 on the base unit 15, around a second pulley 45 at the upper end of the vertical side 18 of the arch unit 20, beneath the upper section 20 and around a third pulley 46 and downwardly alongside the vertical side 19 so as to be connected through a resilient connection 47 to the carriage 25. The resilient connection 47 maintains the first cable 42 in tension. The second cable 43 passes from the drum 40 around a fourth pulley 48 and is connected to the carriage 23. A third length of cable 49 is connected to the carriage 23 through a resilient connection 50 and passes over a fifth pulley 52, passes beneath upper section 20, over a sixth pulley 53 rotatably mounted at the upper end of vertical side 19, down alongside the latter vertical side and around a seventh pulley 54 rotatably mounted on the base unit 16 and is finally connected to the carriage 25.

With the drum 40 rotating clockwise as viewed in Fig.6, the first cable 42 will be wound off the drum 40 and the second cable 43 wound onto the drum. The winding of cable 43 onto the drum will cause the carriage 23 to be moved downwardly on its rail 22 thereby drawing the third cable 49 downwards past the vertical side 18 which, in turn, causes the carriage 25 also to be moved downwardly. When the drum 40 is rotated anticlockwise as viewed in Fig.6, the length of cable 42 will be wound onto the drum 40 and the length of cable 43 wound off. The winding on of cable 42 will cause carriage 25 to be moved upwardly taking with it cable 49, the latter drawing carriage 23 upwardly. Therefore, operation of the motor 32 to rotate the drum will move both carriages 23, 25 simultaneously either upwards or downwards. The number of pulleys and their arrangement may be varied to route the cables appropriately. The carriage 20 may be connected directly to one of the cables 42, 49 or via a pulley system to reduce side-to-side movement. Alternatively it could be driven by independent cabling operated by motor 32 or a separate motor. Instead, the jet of carriage 23 may be mounted directly on the upper section 20 and arranged simply to oscillate rather than travel from side to side.

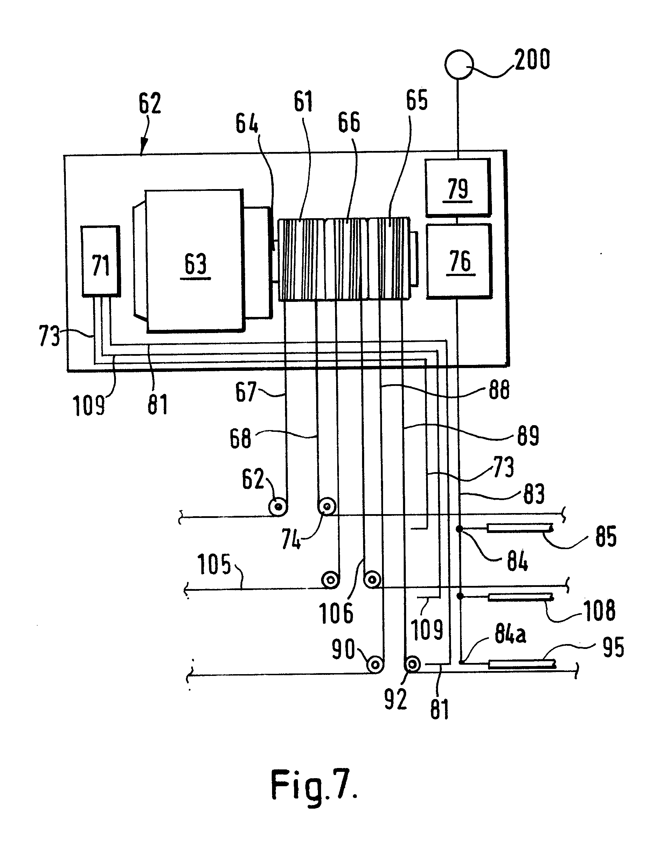

The base units 15, 16 can be drawn along the rails 10, 12 by cabling which is now described with reference to Figs.1 and 7.

A drive unit 60 has a housing 62 in which there is arranged a driving motor 63. The motor 63 has an output shaft 64 on which there is mounted co-axial first, second and third winding drums 61, 65 and 66. Preferably, the output shaft 64 drives the winding drums via a gearbox. The winding drum 61 has two lengths of cable 67, 68 wound thereon in such a manner that rotation of the drum in one direction will wind on one length of cable and wind off the other length of cable. The cable 67 passes around a pulley 69 and extends towards the left hand of the rail 10 as viewed in Fig.1. Cable 67 then passes around a pulley arrangement (not shown) at the left hand end of the rail 10 and then extends back lengthwise of the rail to terminate at a pulley mounting 70 which is slidable along the rail 10. The pulley mounting 70 rotatably supports a pulley 72. An electrical cable 73 extends from a supply point 71 in the housing 62 and passes upwardly through one of the rail supports indicated at 13a. The cable then extends through an aperture in the support, passes around the pulley 72 and extends longitudinally of the rail into the base unit 15 to which the cable is attached. The cable, or a further cable connected thereto, then extends upwardly out of the base unit 15 to supply the motor 30 with electrical power for oscillating the spray jet 20 and to supply motor 32. The cable 31 for supplying electricity for powering the motor for turning the rail about vertical axis 27 is electrically connected to cable 73. The length of cable 68 passes round a pulley 74 and extends towards the right hand end of the rail 10, the cable passing around a pulley arrangement (not shown) at the right hand end of the rail and extending alongside the rail to terminate at a pulley mounting 77 slidable along the rail 10. The mounting 77 rotatably supports a pulley 78.

A water supply, which may be a water main 200 or a reservoir, supplies water to a pump 79 upstream of a valve unit 76 in the housing. The operation of the valve unit permits detergent or other cleaning fluid or chemical to be introduced into the water. The detergent is contained in a suitable holder or reservoir (not shown). If desired the detergent may be introduced into the water upstream of the pump 79. An outlet pipe 83 extends from the valve arrangement 76 to an outlet point 84 adjacent the rail support 13a from which the electrical cable 73 extends. It will be noted that the latter rail support lies substantially mid-way between the ends of the rail 10. A flexible supply hose 85 extends from the outlet point 84, around the pulley 78 and into the base unit 15 to which the hose is attached. The supply hose 85 supplies an outlet 86 positioned half-way up the vertical side 18 of the arch.

It will be noted that the length of the electrical cable 73 is no less than approximately half the length of the travel of the arch along the rails 10, 12 and the length of the supply hose 85 is similar. Preferably, resilient tensioning (not shown) such as a tension spring is provided in each of the cables 67, 68 to ensure that they remain taut.

A flexible feed house 87 extends from the outlet 86 to the carriage 23 to supply liquid to the spray head 28. The total length of the flexible feed hose 87 is preferably no less than half the total length of travel of the carriage 23 along the rail 22. In that way, a length of the flexible feed hose 87 is kept to a minimum.

The winding drum 65 has lengths of cable 88, 89 thereon which pass around respective pulleys 90, 92 and are then arranged in a manner identical to the cables 67, 68 around pulleys adjacent the rail 12 which terminate at pulley mountings 93, 94 slidable along rail 12. Outlet pipe 83 also feeds an outlet 84a identical to outlet 84 adjacent the mid-point of rail 12 and a flexible supply hose 95 identical to hose 85 is provided and supplies fluid to an outlet (not shown) identical to outlet 86 from vertical side 19. A feed hose (not shown) identical to feed hose 87 is provided for the carriage 25 to feed jet 28 thereon. An electrical cable 81 is arranged in the same way as cable 73 for supplying electric current to the motors associated with carriage 25.

Where the third carriage 26 is provided, the outlet 86 may be connected to an outlet on the upper section 20 through which fluid can be supplied to a jet on the carriage 26.

A control unit 96 may be operated by the driver of a vehicle V (Fig.2) to be cleansed and is arranged at a suitable height to align with a cab window. If desired, the height of the control unit may be adjustable.

It will be noted from Fig.1 that two further rails 100, 102 are provided at ground level and a carriage 103 is movable along the rails by two lengths of cable 105, 106 from drum 66. The carriage 103 carries an oscillating lance 107. A flexible supply hose 108 is provided and an electrical supply cable 109. The reader is directed to our European Patent Number 0,100,680 which describes the operation of the ground level carriage 103 for cleansing the underside of a vehicle. The fluid feed to the carriage 103 comes from the reservoir 79 via the valve unit 76 and the electrical supply cable 109 is connected to the supply point 71 in the drive unit.

In use, the vehicle is driven between the rails 10, 12 so that its wheels lie on ground strips G. The driver of the vehicle aligns the cab window with the control unit 96. The control unit is associated with a control computer which has, in its memory, the cleaning sequence required for the particular vehicle being cleansed. Once the control unit has been operated, the arch 14 is moved along the rails by operation of the motor 63 to the starting point for spraying a detergent mixture through the spray jets 28 and, where provided, a spray jet on carriage 26. While spraying the liquid, the carriages 23, 25 are moved upwardly and downwardly while the arch moves continuously or step wise along the rails 10, 12. Movement of the cables 67, 68 and 88, 89 is transmitted to the base units through the electrical cables 73, 81 when moving the arch to the left and through the hoses 85, 95 when moving the arch to the right. The procedure is continued until the arch has travelled the full length of the vehicle. Where the vehicle is, say, a flat bed truck, the upward and downward movement of the carriages 23, 25 may be reduced by the control computer when cleaning the sides of the flat bed section and may then be arranged to travel upwardly and downwardly for greater distances when cleaning the cab section of the truck. Once the arch reaches the ends of its horizontal travel, the rails 22, 24 are pivoted in opposite senses about their pivotal axis (axis 37 for rail 22) so as to direct spray positively against the adjacent end of the vehicle. During the spraying mode, the spray heads 28 are oscillated about their axis 29. The travel of the arch continues until sufficient detergent mixture has been applied to the vehicle. The valve arrangement 76 is then computer controlled to cut off the supply of detergent mixture and to supply plain water for rinsing the vehicle. The arch 14 moves in reverse and the carriages 23 and 25 move vertically as before.

Simultaneously, the carriage 103 is moved along the rails 100, 102 under the control of the computer to clean the underside of the vehicle, the motor 63 being arranged to move the carriage 103 along its rails.

The pump 79 is preferably capable of delivering water at the rate of between approximately 45 and 90 litres per minute. Such a pump will require considerably less power than pumps used with conventional wash arch units which need to deliver between 300 and 500 litres per minute when feeding a multiplicity of jets with cleansing fluid. Therefore, with the present invention, a pump of reduced power and energy consumption can be used whilst providing extremely high pressure jets capable of dislodging heavy soiling from vehicles.

Whilst specific reference has been made to vehicles, the unit could be used for washing other objects which could be placed beneath the arch.

**Claims**

1. Cleaning apparatus for cleaning a surface of a vehicle, the apparatus comprising a jet mounted on support means to enable fluid received from a supply to be directed towards the surface of the vehicle, characterised in that the jet is movable up and down relative to the surface to be cleaned.

2. Cleaning apparatus according to Claim 1 characterised in that the jet is mounted for oscillation in a generally horizontal plane.

3. Cleaning apparatus according to Claim 1 or 2 characterised in that the support means includes a guide along which the jet or a carriage on which the jet is mounted moves up and down.

4. Cleaning apparatus according to Claims 1, 2 or 3 in which the support means may be arranged to turn about a substantially vertical axis.

5. Cleaning apparatus according to any preceding Claim characterised in that the support means is mounted for movement horizontally relative to the surface to be cleaned.

6. Cleaning apparatus according to Claim 5 characterised in that where the support means is arranged to turn about a substantially vertical axis, turning takes place as the support means reaches a limit of horizontal movement.

7. Cleaning apparatus according to any preceding Claim characterised in that a second jet is provided for cleaning an opposite surface of the vehicle, the second jet being mounted for up and down movement on second support means.

8. Cleaning apparatus according to Claim 7 characterised in that the first and second jets are movable up and down by motor driven cable means.

9. Cleaning apparatus according to Claim 7 characterised in that a common motor drives cabling to move both of the jets simultaneously.

10. Cleaning apparatus according to any preceding Claim characterised in that feed to the or each jet is effected through a hose which extends from a position substantially midway between the ends of up and down travel of the or each jet.

11. Cleaning apparatus according to any preceding Claim characterised in that where two support means are provided, the support means comprise two upwardly extending members joined at their upper ends to form an arch.

12. Cleaning apparatus according to Claim 11 characterised in that a section joining the two upwardly extending members carries a third jet.

13. Cleaning apparatus according to Claim 11 characterised in that the third jet is movable from side to side to spray fluid on to a roof of the vehicle.

14. Cleaning apparatus according to any preceding Claim characterised in that the or each jet is controlled by a programmable unit which controls the extent to which the jets move.

Fig.1.

Fig.2.

EP 0 349 334 A2

Fig.3.

Fig.5.

Fig.4.

Fig.6.

Fig.7.